Europäisches Patentamt

(19) **European Patent Office**

Office européen des brevets

(11) Veröffentlichungsnummer: **0 085 169**
**B1**

(12) **EUROPÄISCHE PATENTSCHRIFT**

(45) Veröffentlichungstag der Patentschrift:
**27.03.85**

(51) Int. Cl.⁴: **B 23 Q 3/08**, F 15 B 15/06

(21) Anmeldenummer: **82111677.9**

(22) Anmeldetag: **16.12.82**

(54) **Schwenkspanner.**

(30) Priorität: **15.01.82 DE 3201013**

(43) Veröffentlichungstag der Anmeldung:
**10.08.83 Patentblatt 83/32**

(45) Bekanntmachung des Hinweises auf die Patenterteilung:
**27.03.85 Patentblatt 85/13**

(84) Benannte Vertragsstaaten:
**CH FR GB IT LI SE**

(56) Entgegenhaltungen:
**DE - A - 2 354 452**
**DE - U - 6 606 224**
**DE - U - 7 534 834**
**US - A - 3 362 301**
**US - A - 3 572 216**
**US - A - 3 605 569**
**US - A - 3 869 928**

**Patent Abstracts of Japan**

(73) Patentinhaber: **Maschinenfabrik Hilma GmbH,
Schützenstrasse, D-5912 Hilchenbach (DE)**

(72) Erfinder: **Ersoy, Metin, Dr.-Ing., Hauptstrasse 17,
D-5912 Hilchenbach (DE)**

(74) Vertreter: **Bruse, Willy Hans Heinrich, Edisonstrasse 14,
D-2800 Bremen 33 (DE)**

BUNDESDRUCKEREI BERLIN

## Beschreibung

Die Erfindung betrifft einen hyraulisch betätigbaren Schwenkspanner, insbesondere zum Festspannen von Werkstücken auf dem Tisch einer Werkzeugmaschine, mit einem in einem Gehäuse angeordneten Kolben, dessen Kolbenstange aus dem Gehäuse abgedichtet herausragt und einen Spannarm trägt und der außer einer axialen Spannbewegung eine ein Verschwenken des Spannarmes bewirkende Drehbewegung entsprechend einer Führungseinrichtung ausführt, die aus einem normalerweise unverdrehbar am Gehäuse angeordneten, in den Kolben hineinragenden Steuerbolzen sowie mindestens einer Steuerkurve besteht, welche in der Führungsfläche zwischen Steuerbolzen und Kolben mit einem wendelförmigen Kurvenstück für die Schwenk- und gleichzeitige Hubbewegung und einem axialen Abschnitt für die reine Spannbewegung des Spannarmes ausgebildet ist und in die ein am Kolben oder Steuerbolzen angeordnetes Führungsglied hineinragt.

Derartige hydraulisch betätigbare Schwenkspanner, die entweder in beiden Arbeitsrichtungen hydraulisch betätigbar sind (doppeltwirkende Ausführung) oder in einfachwirkender Ausführung mit einem Federrückzug ausgestattet werden, sind in verschiedenen Ausführungen bekannt. Sie ersetzen bekannte Bauelemente, wie Kipphebel, Spanneisen oder Spannpratzen an Vorrichtungen und Maschinen, da ihr hydraulisch betätigter Spannarm nicht nur eine zuverlässige Spannbewegung ausführt, sondern um eine Schwenkbewegung über 90° in einer rechtwinklig zur Spannrichtung liegenden Ebene selbsttätig in den Spannraum eingeschwenkt bzw. aus diesem herausgeschwenkt wird, wodurch sich beispielsweise das Einlegen und Herausnehmen eines Werkstückes erheblich vereinfacht. Um bei einem falschen oder fehlerhaft eingelegten Werkstück eine Beschädigung sowohl des Werkstückes als auch des Schwenkspanners zu verhindern, kann der die Schwenk- und Spannbewegung des Spannarmes steuernde Bolzen mittels einer Überlastsicherung am Gehäuse des Schwenkspanners befestigt sein, die bei einem blockierten Schwenkvorgang den normalerweise unverdrehbar am Gehäuse angeordneten Steuerbolzen zu einer Zerstörungen vermeidenden Drehbewegung gegenüber dem Gehäuse freigibt.

Bei einer aus der US-PS 3 572 216 bekannten Ausführungsform eines Schwenkspanners greift eine als Führungsglied dienende Kugel, die am Kolben drehbar gelagert ist, in eine als Nut auf der Mantelfläche des Steuerbolzens ausgebildete Steuerkurve ein. Bei dieser Ausbildung der Führungseinrichtung führen der Kolben und damit der an ihm befestigte Spannarm eine hin- und hergehende Hub-Schwenk-Bewegung aus, bei der die als Führungsglied dienende Kugel beim Ein- und Ausfahren des Kolbens der Führungsbahn in umgekehrten Richtungen folgt. Der Spannarm hat dabei zwei Endlagen, nämlich die ausgefahrene Lage als Lösestellung zum Einlegen und Herausnehmen der Werkstücke und die eingefahrene, gegenüber der Lösestellung um 90° verdrehte Lage, die als Spannstellung dient. Bei dieser bekannten Art der Schwenkbewegung wird das Werkstück von oben her in die Spannstelle eingelegt, wenn sich der um 90° wegschwenkende Spannarm in der Lösestellung befindet und kein Hindernis für das einzulegende Werkstück bildet.

In Abhängigkeit von der Ausbildung des Werkstücks oder von speziellen Transporteinrichtungen kann es erforderlich sein, das Werkstück seitlich in die Spannstellung zu schieben, beispielsweise weil das Werkstück schwer ist, spezielle Spannstellen am Werkstück dieses seitliche Einschieben erfordern oder weil eine geringe Höhe des Arbeitsraumes ein Einlegen von oben nicht zuläßt. Bei diesem seitlichen Einschieben des Werkstücks in die Bearbeitungsstelle bildet jedoch der um 90° aus der Spannstellung verschwenkte, aus der Spannfläche herausragende Spannarm ein unerwünschtes Hindernis.

Der Erfindung liegt deshalb die Aufgabe zugrunde, den Schwenkspanner der eingangs beschriebenen Art derart weiterzubilden, daß der in einer Ruhestellung befindliche Spannarm das Einlegen des Werkstückes nicht behindert.

Die Lösung dieser Aufgabenstellung durch die Erfindung ist dadurch gekennzeichnet, daß der Spannarm aus einer um einen vorgegebenen Winkel gegenüber der Spannstellung verdrehten, oberhalb der Spannebene liegenden Zwischenstellung in eine gegenüber der Spannstellung um den doppelten Winkel verdrehte, unterhalb der Spannebene liegende Ruhestellung verschwenkbar ist. Unter Spannebene wird die Auflageebene der Werkstücke verstanden.

Mit diesem Vorschlag der Erfindung wird ein hydraulisch betätigbarer Schwenkspanner geschaffen, dessen Spannarm aus der Spannstellung selbsttätig über eine oberhalb der Spannebene liegende Zwischenstellung in eine unterhalb der Spannebene liegende Ruhestellung verschwenkt wird, so daß er den Arbeitsraum vollständig freigibt, um die Werkstücke auch von der Seite her in ihre Spannstellung einführen zu können. Der Spannarm kann auch als wegschwenkbarer Anschlag verwendet werden, wenn das Werkstück an der Spannstelle bearbeitet werden soll. Der erfindungsgemäße Schwenkspanner vermeidet somit jegliche Behinderung des Werkstücktransportes durch den Spannarm des Schwenkspanners. Die Spannstellung des Spannarmes entspricht hierbei der Spannstellung bekannter Ausführungen. Beim Ausfahren des Kolbens schwenkt der Spannarm jedoch um einen vorgegebenen Winkel, beispielsweise 45 oder 90° in die oberhalb der Spannebene liegende Zwischenstellung, aus der Spannarm bei einem anschließenden Einfahren des Kolbens in seine Ruhestellung unterhalb der Spannebene schwenkt, beispielsweise um weitere 45 bzw. 90°.

Um diesen Bewegungsablauf des Spannarmes zu erreichen, ist gemäß einer besonderen Ausführungsart der Erfindung zwischen zwei eine axiale Spannbewegung bewirkenden axialen Abschnitten der Steuerkurve jeweils ein axial verlaufendes Zusatzstück für die Zwischenstellung bei ausgehobenem Spannarm ausgebildet, welches durch wendelförmige Kurvenstücke mit den beiden axialen Abschnitten derart verbunden ist, daß das obere Ende des einen axialen Abschnittes im mittleren Bereich des Zusatzstückes und das untere Ende des Zusatzstückes im oberen Bereich des anderen axialen Abschnittes mündet.

Mit dieser Ausführungsart wird erreicht, daß unvermeidbar vorhandene Einmündungen im Bereich der in sich geschlossenen Steuerkurve von dem vorzugsweise als Kugel ausgebildeten Führungsglied ohne Funktionsstörungen überfahren werden, wenn der Kolben eine rein axiale Bewegung ausführt, weil die Richtungsstabilität des zuvor geradlinig geführten Kolbens ausreicht, das Führungsglied vor einem unerwünschten Eintreten in ein wendelförmiges Kurvenstück abzuhalten. Die gewünschte Verdrehbewegung des Kolbens gegenüber dem Steuerbolzen findet jeweils am Ende einer rein axialen Bewegung statt, indem die axialen Abschnitte bzw. axial verlaufenden Zusatzstücke der Steuerkurven in Bewegungsrichtung des Führungsgliedes zwangsläufig in wendelförmige Kurvenstücke übergehen. Auf diese Weise wird ohne zusätzliche Zwangsführungsmaßnahmen sichergestellt, daß der Spannarm in der gewünschten Drehrichtung zwischen den drei Stellungen verschwenkt wird.

Bei einem einseitigen Spannarm sind die axialen Abschnitte der Steuerkurve in Umfangsrichtung um 180' zueinander versetzt und die axialen Zusatzstücke in Umfangsrichtung um jeweils 90° gegenüber den axialen Abschnitten versetzt angeordnet. Bei einem Schwenkspanner mit doppelseitigem Spannarm sind vier in Umfangsrichtung jeweils um 90° zueinander versetzt angeordnete axiale Abschnitte ausgebildet, zwischen denen in Umfangsrichtung jeweils um 45° versetzte Zusatzstücke angeordnet sind.

Um einseitige Belastungen der Führungseinrichtung zu vermeiden, können zwei oder mehr sich jeweils diametral gegenüberliegende Führungsglieder zwischen Steuerbolzen und Kolben angeordnet sein. Trotz dieser doppelten oder vierfachen Anordnung ist eine Änderung der Steuerkurve nicht erforderlich.

Da die drei unterschiedlichen Stellungen des Kolbens und damit des Spannarmes stets in der richtigen Reihenfolge und mit einer eindeutigen Führung des Kolbens vollzogen werden, können diese verschiedenen Stellungen des Kolbens gemäß einer weiteren Ausführungsart der Erfindung druck- oder wegabhängig abgetastet werden, beispielsweise mit Hilfe von Druckschaltern im Druckmittelkreis zur Betätigung des Kolbens oder mit Hilfe von Endschaltern.

Die Steuerkurven können entweder in der Mantelfläche des Steuerbolzens oder in der Bohrungsfläche des Kolbens angeordnet sein, wobei die Anordnung des Führungsgliedes dann am Kolben bzw. am Steuerbolzen erfolgt. Eine besonders einfach herstellbare Ausführung ergibt sich, wenn die Steuerkurven als Nuten im Steuerbolzen und die Führungsglieder als Kugeln ausgebildet werden, die in einem Käfigring am Kolben drehbar gelagert sind.

Auf der Zeichnung sind verschiedene Ausführungsbeispiele des erfindungsgemäßen Schwenkspanners dargestellt, und zwar zeigt

Fig. 1 einen Längsschnitt durch ein erstes Ausführungsbeispiel eines Schwenkspanners mit einseitigem Spannarm,

Fig. 2 eine Abwicklung der Mantelfläche des im Schwenkspanner nach Fig. 1 verwendeten Steuerbolzens,

Fig. 3 eine Draufsicht auf den Spannarm des Schwenkspanners nach Fig. 1 in seinen drei verschiedenen Schwenkstellungen;

Fig. 4 eine Seitenansicht eines Steuerbolzens für einen Schwenkspanner mit doppelseitigem Spannarm,

Fig. 5 eine Abwicklung der Mantelfläche des Steuerbolzens nach Fig. 4;

Fig. 6 und 7 zwei weitere Ausgestaltungsmöglichkeiten für die Steuerkurve.

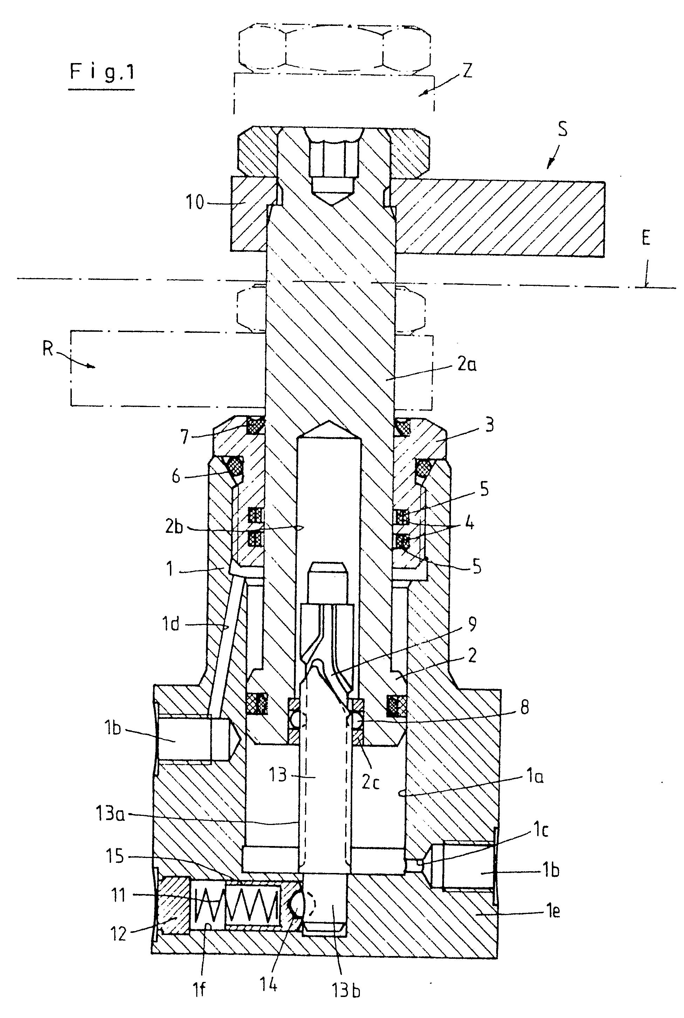

Der anhand eines Ausführungsbeispiels in doppeltwirkender Ausführung in Fig. 1 dargestellte Schwenkspanner besitzt ein Gehäuse 1, das mit einer zylindrischen Bohrung 1a für einen Kolben 2 versehen ist, dessen Kolbenstange 2a aus dem Gehäuse 1 herausgeführt und in einem Gehäusedeckel 3 abgedichtet geführt ist, der in das obere Ende des Gehäuses 1 eingeschraubt wird. Sowohl der Kolben 2 als auch der Gehäusedeckel 3 ist zum Zwecke der Abdichtung mit Dichtringen 4 versehen, die durch untergelegte O-Ringe 5 in ihrer Dichtwirkung unterstützt werden. Auch zwischen dem Gehäusedeckel 3 und dem Gehäuse 1 ist in O-Ring 6 zur Abdichtung angeordnet. Schließlich trägt der Gehäusedeckel 3 einen mit der Kolbenstange 2a zusammenwirkenden Abstreifring 7.

Im Gehäuse 1 sind zwei Druckmittelanschlüsse 1b ausgebildet, von denen der eine über einen Kanal 1c mit dem Grund der zylindrischen Bohrung 1a verbunden ist, so daß durch diesen Druckmittelanschluß 1b zugeführtes Druckmittel auf den Boden des Kolbens 2 gelangt. Der andere Druckmittelanschluß 1b ist über einen Kanal 1d mit dem oberen Teil des Gehäuses 1 verbunden, so daß zur Ausführung der Spannbewegung durch den Kanal 1d Druckmittel auf die stangenseitige Fläche des Kolbens 2 geführt werden kann.

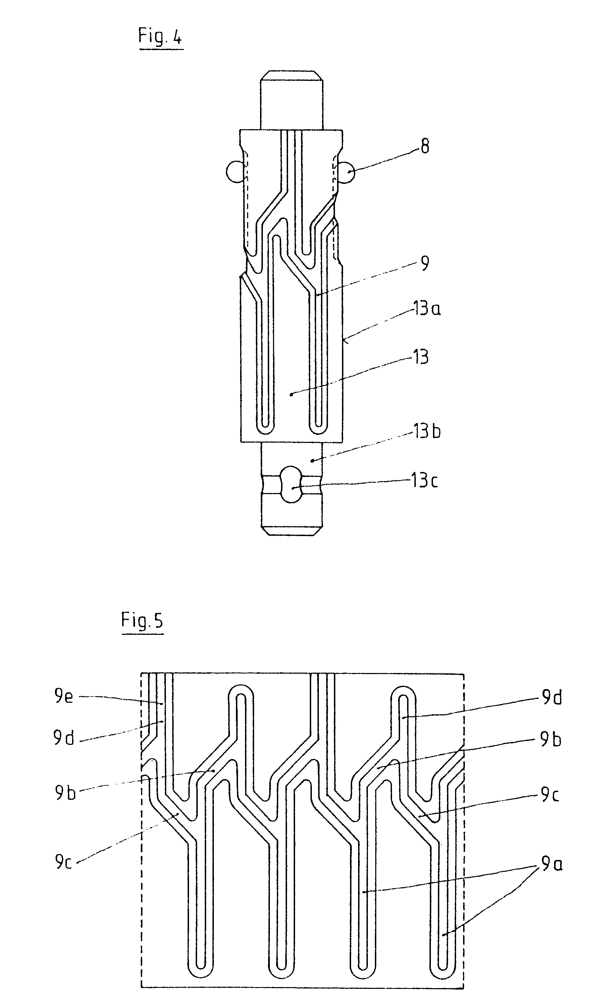

Ein in eine zentrische Bohrung 2b des Kolbens 2 hineinragender Steuerbolzen 13 besitzt eine zylindrische Mantelfläche 13a und an seinem unteren Ende einen zylindrischen Haltezapfen 13b, mit dem er in den Boden 1e des Gehäuses 1 eingesetzt ist. Im Normalfall wird der Steuerbolzen 13 gegen eine Verdrehung im Boden 1e des Gehäuses 1 durch zwei Sperrelemente 14 festgehalten, die in eine Rastvertiefung 13c (siehe Fig. 4) im Haltezapfen 13b des Steuerbolzens 13 eingreifen. Die Sperrelemente 14 werden über Druckstücke 15 durch Sperrfedern 11 gegen den Steuerbolzen 13 gedrückt, wobei diese Druckstücke 15 mit den Sperrelementen 14 und die Sperrfedern 11 in einer Querbohrung 1f im Boden 1e des Gehäuses 1 angeordnet sind. Der besseren Übersichtlichkeit wegen ist nur eine Hälfte der Querbohrung 1f in Fig. 1 um 90° verdreht gezeichnet. Sie ist durch einen Stopfen 12 verschlossen, der gegen Austritt von Druckflüssigkeit nach der Montage der Teile 12 , 14, 15 druckmitteldicht verstemmt ist. Die Anpreßkraft der Sperrfedern 11 ist derart ausgelegt, daß im Normalfall der Steuerbolzen 13 verdrehfest im Gehäuse 1 gehalten ist, daß jedoch eine Verdrehung des Steuerbolzens 13 gegenüber dem Gehäuse 1 stattfinden kann, wenn die auf den Steuerbolzen 13 in Umfangsrichtung ausgeübten Kräfte einen Wert erreichen, der eine Beschädigung des Steuerbolzens 13 oder der mit ihm zusammenwirkenden Teile zur Folge haben könnte.

In der zentrischen Bohrung 2b des Kolbens 2 ist ein Käfigring 2c verdrehfest befestigt. Im Käfigring 2c sind sich auf einem gemeinsamen Durchmesser gegenüberliegend zwei Kugeln 8 drehbar gelagert. Diese Kugeln 8 greifen in jeweils eine Steuerkurve 9 ein, die in der nachstehenden Weise in der Mantelfläche 13a des Steuerbolzens 13 ausgebildet sind. Die Steuerkurven 9 und die als Führungsglieder anzusehenden Kugeln 8 bilden somit zusammen mit dem Steuerbolzen 13 eine Führungseinrichtung für den Kolben 2, die auf einem Teil seines Hubes eine Drehbewegung des Kolbens 2 zur Folge hat. Diese gesteuerte Drehbewegung des Kolbens 2 wird dazu benutzt, einen am Ende seiner Kolbenstange 2a befestigten Spannarm 10 zu verschwenken, der beispielsweise dazu dient, Werkstücke auf dem Tisch einer Werkzeugmaschine festzuspannen.

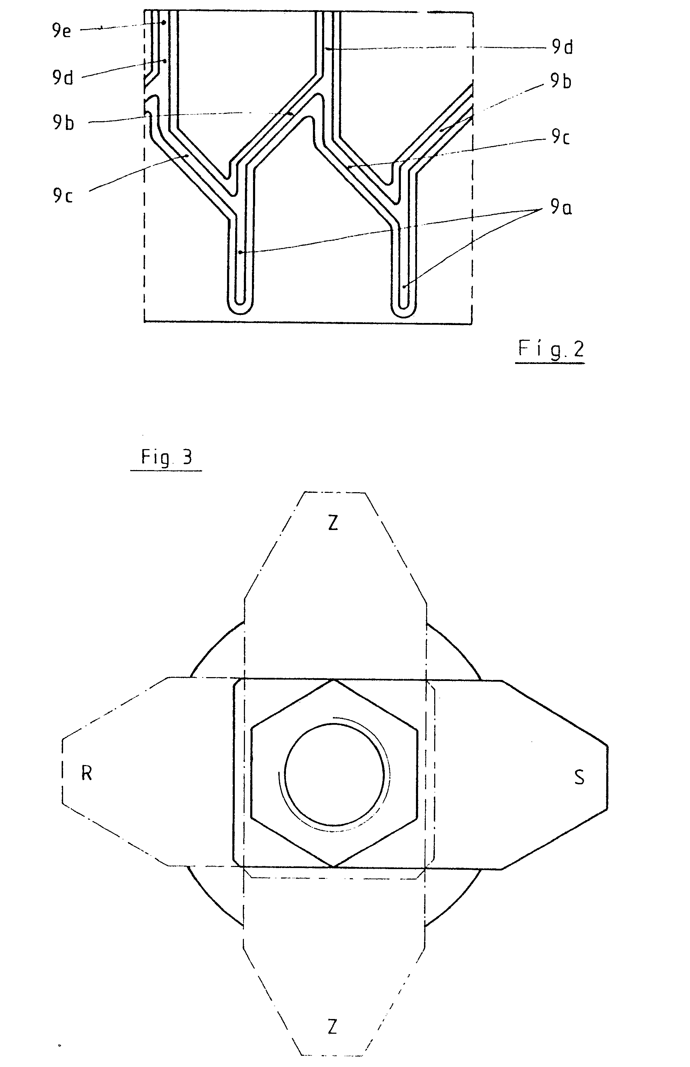

Beim ersten Ausführungsbeispiel gemäß Fig. 1 bis 3 trägt der Kolben 2 einen einseitigen Spannarm 10, dessen Spannstellung S in den Fig. 1 und 3 mit ausgezogenen Linien dargestellt ist, wobei sich der Spannarm 10 in Fig. 1 vor Beginn seines Spannhubes oberhalb der eingezeichneten Spannebene E befindet.

In dieser Stellung greifen die beiden Kugeln 8 jeweils in einen axialen Abschnitt 9a der Steuerkurve 9 ein. Bei Zufuhr von Druckmittel über den Kanal 1d auf die stangenseitige Fläche des Kolbens 2 wird somit der Kolben 2 und mit ihm der Spannarm 10 im Gehäuse 1 abgesenkt, wobei er eine reine axiale Hubbewegung ausführt, die zum Spannen eines eingelegten Werkstückes benutzt wird.

Sobald der Bearbeitungsvorgang am Werkstück beendet ist, wird der Kolben 2 durch Zufuhr von Druckmittel auf seine bodenseitige Druckfläche angehoben. Die Kugeln 8 gelangen hierbei an das obere Ende der axialen Abschnitte 9a der Steuerkurve 9 und bewirken bei einer weiteren Axialverschiebung des Kolbens 2 nach oben durch ihre Führung in den wendelförmigen Kurvenstücken 9b gleichzeitig eine Verschwenkung des Kolbens 2 und damit des Spannarmes 10 um 90°. Am Ende der Kurvenstücke 9b treten die Kugeln 8 in die axialen Zusatzstücke 9d ein, die wiederum eine reine Axialverschiebung des Kolbens 2 und damit des Spannarmes 10 zur Folge haben. Der Kolben 2 gelangt somit in seine durch Anschlag am Gehäusedeckel 3 in der Höhe begrenzte Zwischenstellung Z, die in den Fig. 1 und 3 eingezeichnet ist.

Nunmehr wird erneut die stangenseitige Fläche des Kolbens 2 mit Druckmittel beaufschlagt. Bei der hierdurch erzielten axialen Bewegung des Kolbens 2 in Richtung auf den Haltezapfen 13b passieren die Kugeln 8 die Einmündung der Kurvenstücke 9b in das axiale Zusatzstück 9d, bevor sie am Ende der Zusatzstücke 9d in die wendelförmigen Kurvenstücke 9c gelangen. Diese Zusatzstücke 9c verdrehen den Kolben 2 und damit den Spannarm 10 um weitere 90°, so daß der Spannarm 10 eine gegenüber der Spannstellung S um 180° verschwenkte Lage einnimmt, wie dies die Fig. 1 und 3 zeigen. In dieser Schwenkstellung wird der Kolben 2 durch eine rein axiale Bewegung abgesenkt bis der Spannarm 10 seine unterhalb der Spannebene E liegende Ruhestellung R erreicht hat, die durch Anlage des Kolbens 2 am Boden 1e des Gehäuses 1 begrenzt ist. In dieser Ruhestellung R des Spannarmes 10 können Werkstücke ohne Behinderung durch den Schwenkspanner in der Spannebene E auch seitlich verschoben werden.

Sobald das Werkstück eingelegt ist, wird die bodenseitige Fläche des Kolbens 2 erneut mit Druckmittel beaufschlagt. Hierdurch führt der Kolben 2 eine rein axiale Hubbewegung aus, weil er durch die Kugeln 8 in den axialen Abschnitten 9a der Steuerkurve 9 geführt wird. Diese Geradführung und die der reinen Axialbewegung innewohnende Trägheit bewirken, daß die im oberen Bereich der axialen Abschnitte 9a einmündenden Kurvenstücke 9c überfahren werden und daß die Kugeln über die Kurvenstücke 9b in die axial verlaufenden Zusatzstücke 9d gelangen, so daß der Spannarm 10 in eine weitere, gegenüber der Ruhestellung R um 90° verdrehte Zwischenstellung Z gelangt, bevor er durch anschließende Druckbeaufschlagung der stangenseitigen Kolbenfläche in die Spannstellung S überführt wird. Auch hierbei überfahren die Kugeln 8 aufgrund ihrer Führung in den axial verlaufenden Zusatzstücken 9d die Einmündung der wendelförmigen Kurvenstücke 9b in die Zusatzstücke 9d und gelangen zwangsläufig in die Kurvenstücke 9c. Diese Kurvenstücke 9c bewirken ein Verschwenken des Spannarmes 10 um weitere 90° in die Spannstellung S. In dieser Spannstellung S sichern die in die axialen Abschnitte 9a der Steuerkurve 9 eingreifenden Kugeln 8 eine reine axiale Hubbewegung des Kolbens 2 und damit des Spannarmes 10.

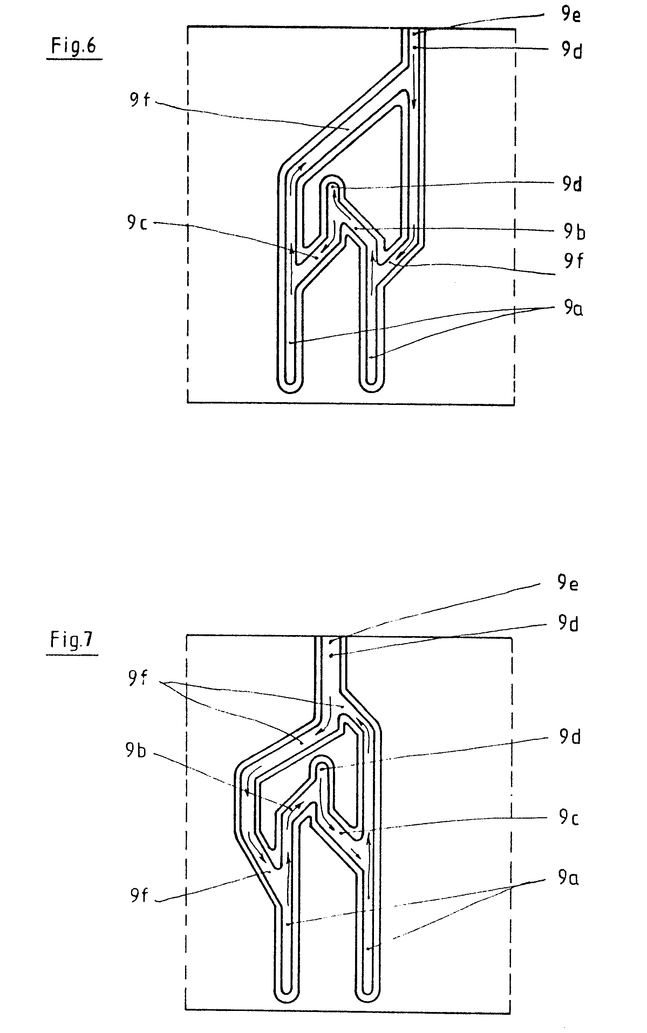

Beim zweiten Ausführungsbeispiel nach den Fig. 4 und 5 ist der Spannarm 10 als beidseitiger Spannarm ausgebildet. Er ragt somit nach entgegengesetzten Seiten von der Kolbenstange 2a hervor und kann gleichzeitig zwei Werkstücke bzw. ein Werkstück an zwei Stellen spannen.

In diesem Fall sind, wie am besten Fig. 5 erkennen läßt, in der Mantelfläche 13a des Steuerbolzens 13 insgesamt vier Steuerkurven 9 ausgebildet, die am unteren Ende parallel zueinander verlaufende und gleichmäßig über den Umfang der Steuerbolzen 13 verteilte axiale Abschnitte 9a besitzen, welche eine geradlinige Bewegung des Kolbens 2 und damit des Spannarmes 10 bewirken. An das obere Ende dieser in Umfangsrichtung jeweils um 90° zueinander versetzter axialen Abschnitte 9a schließen sich wendelförmige Kurvenstücke 9b bzw. 9c an, die außer einer Hubbewegung des Kolbens 2 gleichzeitig eine Drehbewegung erzielen. Diese Drehbewegung erfolgt bei dem in den Fig. 4 und 5 dargestellten Ausführungsbeispiel über einen Bereich von 45° und hat eine entsprechende Verschwenkbewegung des doppelseitigen Spannarmes zur Folge. Während die wendelförmigen Kurvenstücke 9b zu Beginn des Hubes eine Verschwenkung des Spannarmes beim Ausfahren bewirken, erzielen die wendelförmigen Kurvenstücke 9c eine Verschwenkung des Spannarmes 10 beim Einfahren.

An das obere, vom axialen Abschnitt 9a abgewandte Ende der wendelförmigen Kurvenstücke 9b bzw. 9c schließen sich wiederum geradlinig und axial verlaufende Zusatzstücke 9d an, die zur exakten Lagebestimmung des Spannarmes 10 in seiner Zwischenstellung Z dienen. Diese Zwischenstellung Z liegt beim zweiten Ausführungsbeispiel zwischen der Spannstellung S und der gegenüber dieser Spannstellung S um 90° verdrehten Ruhestellung R. Bei dieser Ausführungsform unterscheidet sich somit die Zwischenstellung Z sowohl von der Spannstellung S als auch von der Ruhestellung R durch eine Verdrehung um 45°.

Bei einer Betrachtung der Fig. 1 wird deutlich, daß die von den Kugeln 8 auf den Steuerbolzen 13 bzw. den Kolben 2 ausgeübten Querkräfte bei der Zwangssteuerung des Kolbens 2 sich gegenseitig aufheben, weil die Kugeln 8 einander diametral gegenüberliegen.

Um die Montage des voranstehend beschriebenen Schwenkspanners zu erleichtern und insbesondere ein Einsetzen des mit den Kugeln 8 versehenen Kolbens 2 in das Gehäuse 1 zu ermöglichen, wenn der Steuerbolzen 13 bereits montiert ist, sind zwei der Zusatzstücke 9d in axialer Richtung durch endseitig offene Auslaufstücke 9e verlängert. Hierdurch ist es möglich, die Kugeln 8 von oben her in die Steuerkurven 9 einzuführen.

In Fig. 6 ist eine weitere Ausbildungsmöglichkeit für die Steuerkurve 9 anhand einer Abwicklung dargestellt. Auch bei dieser Ausführungsform liegt ein Zusatzstück 9d für die Zwischenstellung Z zwischen zwei axialen Abschnitten 9a und ist mit diesen über Kurvenstücke 9b und 9c verbunden. Die Steuerkurve ist jedoch in sich bis auf das Auslaufstück 9e zum Einführen der Kugel 8 geschlossen, und zwar durch oberhalb liegende Ergänzungsstücke 9f.

Auch bei der Ausführung nach Fig. 7 liegt eine geschlossene Ausbildung vor, die sich von der in Fig. 6 gezeichneten Konstruktion lediglich durch die Lage der Ergänzungsstücke 9f unterscheidet.

Bezugsziffernliste

| 1 | Gehäuse |
|---|---|
| 1a | Bohrung |
| 1b | Druckmittelanschluß |
| 1c | Kanal |
| 1d | Kanal |
| 1e | Boden |
| 1f | Querbohrung |
| 2 | Kolben |
| 2a | Kolbenstange |
| 2b | Bohrung |
| 2c | Käfigring |
| 3 | Gehäusedeckel |
| 4 | Dichtring |
| 5 | O-Ring |
| 6 | O-Ring |
| 7 | Abstreifring |
| 8 | Kugel |
| 9 | Steuerkurve |
| 9a | Axialer Abschnitt |
| 9b | Kurvenstück |
| 9c | Kurvenstück |
| 9d | Zusatzstück |
| 9e | Auslaufstück |
| 9f | Ergänzungsstück |
| 10 | Spannarm |
| 11 | Sperrfeder |
| 12 | Stopfen |
| 13 | Steuerbolzen |
| 13a | Mantelfläche |
| 13b | Haltezapfen |
| 13c | Rastvertiefung |
| 14 | Sperrelement |
| 15 | Druckstück |
| | |
| E | Spannebene |
| R | Ruhestellung |
| S | Spannstellung |
| Z | Zwischenstellung |

**Patentansprüche**

1. Hydraulisch betätigbarer Schwenkspanner, insbesondere zum Festspannen von Werkstükken, Werkzeugen und Vorrichtungen auf dem Tisch (E) einer Werkzeugmaschine, mit einem in einem Gehäuse (1) angeordneten Kolben (2), dessen Kolbenstange (2a) aus dem Gehäuse abgedichtet herausragt und einen Spannarm (10) trägt und der außer einer axialen Spannbewegung eine ein Verschwenken des Spannarmes bewirkende Drehbewegung entsprechend einer Führungseinrichtung ausführt, die aus einem normalerweise unverdrehbar am Gehäuse angeordneten, in den Kolben hineinragenden Steuerbolzen (13) sowie mindestens einer Steuerkurve (9) besteht, welche in der Führungsfläche zwischen Steuerbolzen und Kolben mit einem wendelförmigen Kurvenstück für die Schwenk- und gleichzeitige Hubbewegung und einem axialen Abschnitt für die reine Spannbewegung des Spannarmes ausgebildet ist und in die ein am Kolben oder Steuerbolzen angeordnetes Führungsglied (8) hineinragt, dadurch gekennzeichnet, daß der Spannarm (10) aus einer um einen vorgegebenen Winkel gegenüber der Spannstellung (S) verdrehten, oberhalb der Spannebene (E) liegenden Zwischenstellung (Z) in eine gegenüber der Spannstellung (S) um den doppelten Winkel verdrehte, unterhalb der Spannebene (E) liegende Ruhestellung (R) verschwenkbar ist.

2. Schwenkspanner nach Anspruch 1, dadurch gekennzeichnet, daß zwischen zwei eine axiale Spannbewegung bewirkenden axialen Abschnitten (9a) der Steuerkurve (9) jeweils ein axial verlaufendes Zusatzstück (9d) für die Zwischenstellung (Z) bei ausgehobenem Spannarm (10) ausgebildet ist, welches durch wendelförmige Kurvenstücke (9b bzw. 9c) mit den beiden axialen Abschnitten (9a) derart verbunden ist, daß das obere Ende des einen axialen Abschnittes (9a) im mittleren Bereich des Zusatzstückes (9d) und das untere Ende des Zusatzstückes (9d) im oberen Bereich des anderen axialen Abschnittes (9a) mündet.

3. Schwenkspanner nach Anspruch 1 und 2 mit einseitigem Spannarm, dadurch gekennzeichnet, daß die axialen Abschnitte (9a) in Umfangsrichtung um 180° zueinander versetzt und die axialen Zusatzstücke (9d) in Umfangsrichtung um jeweils 90° gegenüber den axialen Abschnitten (9a) versetzt angeordnet sind.

4. Schwenkspanner nach Anspruch 1 und 2, mit doppelseitigem Spannarm, dadurch gekennzeichnet, daß vier in Umfangsrichtung jeweils um 90° zueinander versetzt angeordnete axiale Abschnitte (9a) ausgebildet sind, zwischen denen in Umfangsrichtung jeweils um 45° versetzte Zusatzstücke (9d) angeordnet sind.

5. Schwenkspanner nach mindestens einem der Ansprüche 1 bis 4, dadurch gekennzeichnet, daß mindestens zwei sich diametral gegenüberliegende Führungsglieder (Kugeln 8) zwischen Steuerbolzen (13) und Kolben (2) angeordnet sind.

6. Schwenkspanner nach mindestens einem der Ansprüche 1 bis 5 dadurch gekennzeichnet, daß die verschiedenen Stellungen (R, S, Z) des Kolbens (2) druck- oder wegabhängig abgetastet sind.

**Claims**

1. A pivoting clamp which may be hydraulically actuated, in particular for the clamping of workpieces, tools and accessories on the table (E) of a machine tool, having a piston (2) disposed in a housing (1), the piston rod (2a) of which projects from the housing in a sealed manner and supports a clamping arm (10) and which performs, in addition to an axial clamping movement, a rotary movement causing a pivoting of the clamping arm in accordance with a guide device which comprises a control bolt (13) normally disposed in a non-rotatable manner on the housing and projecting into the pistonand at least one control cam (9) which is formed in the guide surface between the control bolt and the piston with a helical cam section for the pivot and simultaneous lifting movement and an axial section for the simple clamping movement of the clamping arm and into which there projects a guide member (8) disposed on the piston or control bolt, characterised in that the clamping arm (10) may be pivoted from an intermediate position (Z) which is rotated through a predetermined angle with respect to the clamping position (S) and lies above the plane of clamping (E) into a rest position (R) which is rotated through double the angle with respect to the clamping position (S) and lies below the plane of clamping (E).

2. A pivoting clamp as claimed in claim 1, characterised in that between two sections (9a) of the control cam (9) causing an axial clamping movement there is formed a respective axially extending auxiliary member (9d) for the intermediate position (Z) when the clamping arm (10) is raised, which member is connected with the two axial sections (9a) by helical cam sections (9b, 9c) in such a way that the upper end of one axial section (9a) communicates with the central area of the auxiliary member (9d) and the lower end of the auxiliary member (9d) communicates with the upper area of the other axial section (9a).

3. A pivoting clamp as claimed in claims 1 and 2 with a clamping arm on one side, characterised in that the axial sections (9a) are mutually offset by 180° in the peripheral direction and in that the axial auxiliary members (9d) are offset by 90° in each case in the peripheral direction with respect to the axial sections (9a).

4. A pivoting arm as claimed in claims 1 and 2, with a clamping arm on both sides, characterised in that four axial sections (9a) are formed and are offset in the peripheral direction by 90° with respect to each other in each case, between which sections there are disposed auxiliary members (9d) which are respectively offset by 45° in the peripheral direction.

5. A pivoting clamp as claimed in one of claims 1 to 4, characterised in that at least two diametrically opposite guide elements (ball bearings 8) are disposed between the control bolt (13) and the piston (2).

6. A pivoting clamp es claimed in one of claims 1 to 5, characterised in that the different positions (R, S, Z) of the piston (2) are scanned as a function of pressure or course.

## Revendications

1. Dispositif de fixation pivotant pouvant être actionné hydrauliquement, notamment pour la fixation de pièces sur la table (E) d'une machine-outil, dispositif comportant; disposé dans un carter un piston (2), dont la tige (2a) sort de façon étanche de ce carter, porte un bras de serrage (10) et qui exécute en dehors d'un mouvement axial de serrage un mouvement tournant assurant un pivotement du bras de serrage en correspondance à un dispositif de guidage, lequel se compose d'une broche de commande (13), disposée normalement sans possibilité de rotation sur le carter et pénétrant dans le piston; ainsi que d'au moins une came de commande (9) qui est formée dans la surface de guidage entre la broche de commande et le piston en étant pourvue d'une partie de came en forme d'hélice; pour le mouvement de pivotement et le mouvement simultané de translation, et d'une partie axiale pour le mouvement de serrage proprement dit du bras de serrage et dans laquelle pénètre un organe de guidage monté sur le piston ou sur la broche de commande, dispositif caractérisé en ce que le bras de serrage (10) est déplaçable par pivotement, à partir d'une position intermédiaire Z placée au-dessus du plan de serrage E et tournée d'un angle prédéterminé par rapport à la position de serrage S, jusqu'à une position de repos R placée en-dessous du plan de serrage E et tournée d'un angle double par rapport à la position de serrage S.

2. Dispositif de fixation pivotant selon la revendication 1, caractérisé en ce qu'il est prévu entre deux parties axiales (9a), assurant un mouvement axial de serrage, de la came de commande (9) respectivement une partie additionelle (9d) orientée axialement et correspondant à la position intermédiaire (Z) lorsque le bras de serrage (10) est sorti, cette partie additionnelle étant reliée par des parties de came en forme d'hélice (9b ou 9c) avec les deux parties axiales (9a) de manière que l'extrémité supérieure d'une des parties axiales (9a) débouche dans une zone médiane de la partie additionnelle (9d) et que l'extrémité inférieure de la partie additionnelle (9d) débouche dans une zone supérieure de l'autre partie axiale (9a).

3. Dispositif de fixation pivotant selon les revendications 1 et 2, comportant un bras de serrage unilatéral et caractérisé en ce que les parties axiales (9a) sont décalées entre elles de 180° dans la direction périphérique et en ce que les parties additionnelles (9d) sont décalées dans la direction périphérique respectivement de 90° par rapport aux parties axiales (9a).

4. Dispositif de fixation pivotant selon les revendications 1 et 2, comportant un bras de serrage bilatéral et caractérisé en ce qu'il est prévu quatre parties axiales (9a) décalées respectivement entre elles de 90° dans la direction périphérique et entre lesquelles sont disposées des parties additionnelles (9d) décalées respectivement de 45° dans la direction périphérique.

5. Dispositif de fixation pivotant selon au moins une des revendications 1 à 4, caractérisé en ce qu'au moins deux organes de guidage (billes 8) diamétralement opposés sont montés entre la broche de commande (13) et le piston (2).

6. Dispositif de fixation pivotant selon au moins l'une des revendications 1 à 5, caractérisé en ce que les différentes positions (R, S, Z) du piston (2) peuvent être explorées en fonction d'une pression ou d'un déplacement.

Fig.1

Fig. 2

Fig. 3

11

Fig. 4

Fig. 5

0 085 169

Fig.6

Fig.7

15